# EUROPEAN PATENT APPLICATION

(11) **EP 0 786 724 A1**
(43) Date of publication of application: **30.07.1997**
(21) Application number: 97101213.3
(22) Date of filing: 27.01.1997
(51) Int. Cl.: G06F 9/46, G06F 9/44

(54) **Method and apparatus for transferring information between computing environments**

(30) Priority: 29.01.1996 US 593745
(71) Applicant: SUN MICROSYSTEMS, INC., Mountain View, California 94043-1100 (US)
(72) Inventor: Yee, Michael K., No. 11-F Sunnyvale, California 94087 (US)
(74) Representative: Goddar, Heinz J., Dr.

(57) **Abstract**

A method and apparatus is described to transparently interchange data between environments or systems. A data transfer operation such as a cut, copy, or paste is initiated by an application in a first environment. The initiation of the operation is detected by a data transfer interface. The data transfer interface has functionality to process data transfer operations within each environment. Further, the data transfer interface has functionality to transfer data between environments. Data that is selected in a first environment is available to a requester in another environment. An application running in one environment can gain access to data that resides in an application running in another environment. The two applications can exchange data without being aware of the environment in which the other application resides. There is no need to modify the applications to interchange data. A data transfer interface is used to process data transfer operations. The data transfer interface comprises an interface pasteboard server (IPBS) and an associated IPBS window. Selection data can be copied to the IPBS for access by a requester.

## Description

### BACKGROUND OF THE INVENTION

### 1. FIELD OF THE INVENTION

This invention relates to transferring information between environments.

### 2. BACKGROUND

OpenStep ™ is an open, high-volume portable standard for object-oriented computing. It provides a standard application programming interface (API). The OpenStep specification is based on NeXTStep. NeXTStep ™ is an object-oriented operating system of NeXT Computer, Inc.

The NeXTStep Window Server running in the NeXT environment is a low-level process that is responsible for drawing images to the screen and sending events to applications. The NeXTStep Window Server manages the screen, keyboard, and mouse.

The NeXTStep Window Server includes a Display Postscript interpreter that performs the actual drawing of lines, text, and pictures. Postscript is a device-independent graphics description language that processes commands to perform line drawing, typesetting, and image presentation on the screen and printer output.

In addition to providing graphic user interface (GUI) capabilities, NeXTStep provides an application development environment. In addition to the development environment, the NeXTStep Application Kit, or App Kit, provides object classes for providing functionality to an application.

The NeXTStep environment runs in the Mach operating system (OS). The Mach OS is a microkernel-based operating system. A microkernel-based OS provides a basic level of services with the bulk of the operating system services supplied by user-level services. For example, the Mach kernel provides process management, memory management, communication and Input/Output services. Services such as files and directories are handled by user-level processes.

The communication service provided by the Mach OS uses a data structure called a port. A port is analogous to a mailbox. A sender (e.g., a thread, or executable subcomponent of a process) communicates with a receiver (e.g., thread of another process) by writing a message to the mailbox, or port. The receiver retrieves the sender's message from the port.

In the above example, the sender's message is not actually stored in the port. The message is stored in a message queue. The port contains a count of the number of messages in the message queue. When a port is created, an integer that identifies the port is sent back to the creator (e.g., a thread). The identifier is used to access the port to send or receive a message.

Solaris ™ is a UNIX operating environment that can run on multiple hardware platforms such as Intel x86, SPARC, and PowerPC processors. OpenWindows ™ is a windowing system based on the X11 windowing specification that runs in Solaris. The X11/DPS is a windowing system that runs in OpenWindows. Solaris, OpenWindows, and X11/DPS are products that are available from Sun Microsystems, Inc. (Sun Microsystems, Inc., OpenWindows, X11/DPS, and Solaris are trademarks or registered trademarks of Sun Microsystems, Inc. in the U.S. and certain other countries.)

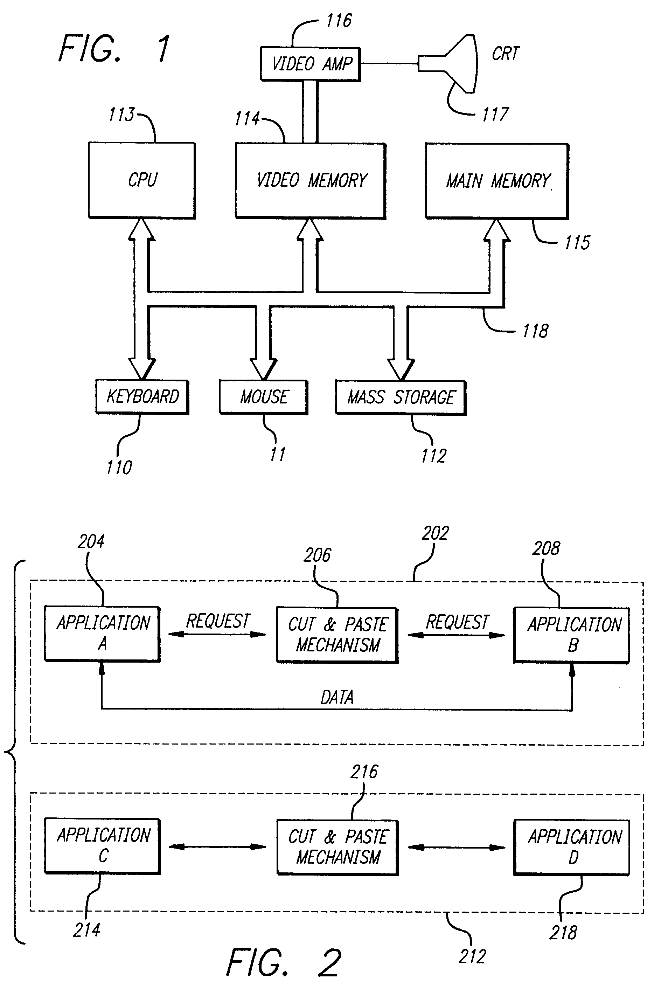

Figure 2 illustrates two separate and independent cut and paste mechanisms 206 and 216 having no data interchange capabilities. Mechanism 206 provides functionality to allow applications 204 and 208 to interchange information within environment 202. Mechanism 206 is, for example, the X Selections cut and paste mechanism described in the Inter-client Communication Convention Manual (ICCCM) version 2, X Consortium Standard, X Version 11, Release 6. Sun's X11/DPS windowing system running OpenWindows in the Solaris operating system implements this mechanism. When application A running in window 204 selects data and chooses an operation, it becomes the selection owner. To obtain the current selection data, application B running in window 208 identifies the current selection owner by requesting the identity from mechanism 206. Application B makes a request of the current selection owner, application A, for the selection data.

Applications C and D run in windows 214 and 218 in environment 212. They share information via mechanism 216. Mechanism 216 is, for example, the Pasteboard functionality provided in the NeXTStep environment. Applications C and D interchange data using the messaging and port mechanisms provided in the NeXTStep environment. For example, Application C selects data and chooses an operation. A message is sent to mechanism 216 to identify application C as having data for transfer. The selection data either remains in application C or is transferred to mechanism 216. Application D requests data by sending a message to mechanism 216. If the data was sent to mechanism 216, application D can retrieve the data from mechanism 216. Otherwise, the data is transferred to mechanism 216 and then retrieved by application D.

The prior cut and paste functionality has been used within a single environment. There is no ability to exchange data between environments. That is, applications that run in environment 202 (i.e., applications A and B) cannot exchange data with applications in environment 212 (i.e., applications C and D). It would be beneficial to provide a cut and paste functionality such that information can be transferred between environments, or systems.

### SUMMARY OF THE INVENTION

A method and apparatus is described to transparently interchange data between environments or systems. A data transfer operation such as a cut, copy, or paste is initiated by an application in a first environment. The initiation of the operation is detected by a data transfer interface. The data transfer interface has functionality to process data transfer operations within each environment. Further, the data transfer interface has functionality to transfer data between environments.

A data transfer operation is initiated by, for example, selecting the data and choosing an operation. The initiation of a data transfer operation is detected regardless of the environment in which the data transfer operation is initiated. The data selected in the data transfer operation is located for subsequent use. Location of the selection data is performed so that data is available, if requested. Data is made available by copying the selection data to a location from which it can subsequently be retrieved, for example. Alternatively, the data's location at the time of selection can be retained for future use.

A data transfer operation such as a paste operation is a request for selection data. The data transfer operation is detected independent of the environment in which it is initiated. Once such an operation is detected, the data is made available to the requester.

Data that is selected in a first environment is available to a requester in another environment. An application running in one environment can gain access to data that resides in an application running in another environment. The two applications can exchange data without being aware of the environment in which the other application resides. There is no need to modify the applications to interchange data.

A data transfer interface is used to process data transfer operations. The data transfer interface comprises an interface pasteboard server (IPBS) and an associated IPBS window. Selection data can be copied to the IPBS for access by a requester. When data is selected in an environment, the IPBS stores the current data selection in a buffer. The data is therefore accessible by an application accessing the IPBS. Thus, the data is available to any requester that accesses the IPBS regardless of the environment in which the requester resides. The application that requests data can reside in an environment that is different than the environment in which the data was selected. Alternatively, the requester can reside in the same environment as the application that selected the data. The selection data is therefore available to multiple environments.

In a NeXTStep/OpenStep environment, for example, the IPBS processes messages generated by an application when a data transfer operation is initiated. When a data transfer operation is initiated, the IPBS receives the associated message. The IPBS locates the selection data when an operation such as a cut or copy is performed. When a message associated with a paste operation is received, the IPBS makes the selection data available.

In an X11/DPS windowing system under OpenWindows running in the Solaris operating system, the IPBS and its associated IPBS window become the exclusive selection owner. The IPBS makes a request for selection ownership. The IPBS monitors the selection ownership. When selection ownership is lost, the IPBS determines the current selection owner. The IPBS retrieves the selection data from the current selection owner (e.g., an X11 window). The IPBS makes a request to regain the selection ownership designation. Thus, when a requester wants the current selection data, the requester is directed to the IPBS to access the selection data.

### BRIEF DESCRIPTION OF THE DRAWINGS

Figure 1 provides an example of a general purpose computer to be used in accordance with embodiments of the present invention.

Figure 2 illustrates two separate and independent cut and paste mechanisms 206 and 216 having no data interchange capabilities.

Figure 3 provides an overview of data interchange according to an embodiment of the present invention.

Figure 4 provides a process flow for responding to a data transfer selection or request according to an embodiment of the present invention.

Figure 5 provides a process flow for responding to a request for data according to an embodiment of the present invention.

Figure 6 provides a process flow for data selection interface handling for a Sun environment according to an embodiment of the present invention.

Figure 7 provides a process flow for data selection interface handling for a NeXTStep/OpenStep environment according to an embodiment of the present invention.

Figure 8 provides a process flow for data request interface handling for a Sun environment according to an embodiment of the present invention.

Figure 9 provides a process flow for data request interface handling for a NeXTStep/OpenStep environment according to an embodiment of the present invention.

### DETAILED DESCRIPTION OF THE INVENTION

A method and apparatus for transferring information between environments or systems is described. In the following description, numerous specific details are set forth in order to provide a more thorough description of the present invention. It will be apparent, however, to one skilled in the art, that the present invention may be practiced without these specific details. In other instances, well-known features have not been described in detail so as not to obscure the invention.

The present invention can be implemented on a general purpose computer such as illustrated in Figure 1. A keyboard 110 and mouse 111 are coupled to a bi-directional system bus 118. The keyboard and mouse are for introducing user input to the computer system and communicating that user input to CPU 113. The computer system of Figure 1 also includes a video memory 114, main memory 115 and mass storage 112, all coupled to bi-directional system bus 118 along with keyboard 110, mouse 111 and CPU 113. The mass storage 112 may include both fixed and removable media, such as magnetic, optical or magnetic optical storage systems or any other available mass storage technology. Bus 118 may contain, for example, 32 address lines for addressing video memory 114 or main memory 115. The system bus 118 also includes, for example, a 32-bit DATA bus for transferring DATA between and among the components, such as CPU 113, main memory 115, video memory 114 and mass storage 112. Alternatively, multiplex DATA/address lines may be used instead of separate DATA and address lines.

In the preferred embodiment of this invention, the CPU 113 is a 32-bit microprocessor manufactured by Motorola, such as the 680X0 processor, a 80X86 microprocessor manufactured by Intel, or a SPARC microprocessor. However, any other suitable microprocessor or microcomputer may be utilized. Main memory 115 is comprised of dynamic random access memory (DRAM). Video memory 114 is a dual-ported video random access memory. One port of the video memory 114 is coupled to video amplifier 116. The video amplifier 116 is used to drive the cathode ray tube (CRT) raster monitor 117. Video amplifier 116 is well known in the art and may be implemented by any suitable means. This circuitry converts pixel DATA stored in video memory 114 to a raster signal suitable for use by monitor 117. Monitor 117 is a type of monitor suitable for displaying graphic images.

The computer system described above is for purposes of example only. The present invention may be implemented in any type of computer system or programming or processing environment. When a general purpose computer system such as the one described executes the processes and process flows described herein, it is configured to transfer information between environments.

An environment supplies a set of resources to a user or application program. An environment may provide a layer of independence over the underlying operating system and hardware. By way of example, the present invention is described with reference to the NeXTStep/OpenStep environment using X11/DPS under OpenWindows on Solaris. However, it should be apparent that the functionality described herein can be used to transfer information between systems or environments. Further, the present invention may be used with a computer system that is configured to run an environment within a window of another environment. However, it should be apparent to one of ordinary skill that the functionality described herein can be practiced with two autonomous environments running in different systems.

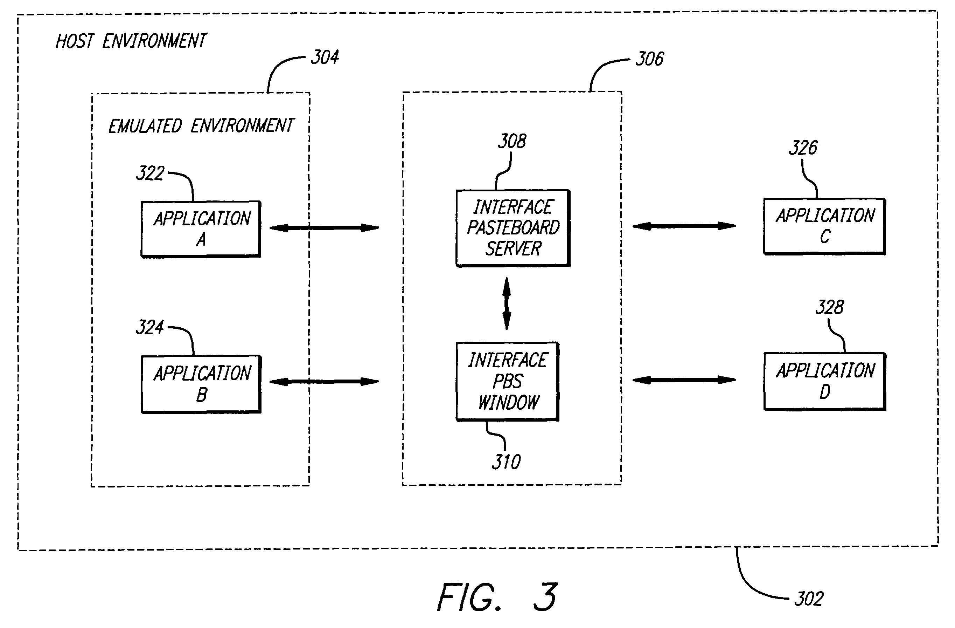

Figure 3 provides an overview of data interchange according to an embodiment of the present invention. Emulated environment 304 runs in host environment 302. Host environment 302 is, for example, the X11/DPS windowing system in OpenWindows on the Solaris operating system. Emulated environment 304 is the NeXTStep/OpenStep environment, for example. Emulated environment 304 is running a window of host environment 302. Running an environment in a window of another environment is described in a co-pending United States Patent Application entitled "Method and Apparatus for Executing and Displaying Output of an Environment in a Host Environment", Serial No. 08/593,712, filed on January 29, 1996, assigned to the assignee of the present invention, and incorporated herein by reference.

Applications of emulated environment 304 are executed in emulated environment 304 running in host environment 302. Output generated by an application of emulated environment 304 is displayed in a window of host environment 302. Windows 322 and 324 are associated with and display output from applications running in environment 304, for example. Windows 326 and 328 are associated with applications running in host environment 302.

Data is interchanged between the applications associated with windows 322, 324, 326, and 326 via data transfer interface 306. Data transfer interface 306 services the data interchange operations generated by applications A, B, C, and D running in windows 322, 324, 326, and 328, respectively. The data interchanges operations can be inter- or intra-environment operations. That is, application A can transfer data with application B within emulated environment 304. Application A can also transfer data with either application C or D that run in host environment 302. Similarly, application C can transfer data with applications A, B and/or D.

Using data transfer interface 306, emulated environment 304 and host environment 302 can transparently interchange information. Thus, it is not necessary for Application A to be aware of the environment in which another application is running in order to send or receive data from the other application.

Data transfer interface 306 comprises interface pasteboard server (IPBS) 308 and IPBS window 310. Preferably, IPBS window 310 is an unmapped window that is associated with IPBS 308. IPBS window 310 is used to support selection in an X11/DPS windowing system, for example. IPBS 308 includes functionality to process data transfers for each environment. That is, IPBS 308 accommodates each environment's data transfer requirements. For example, if environment 304 is the NeXTStep/OpenStep environment and environment 302 is the Sun environment described above, IPBS 308 provides the messaging, pasteboard services, and selections functionality expected by the two environments. Preferably, IPBS 308 comprises two processes or two threads of a single process. One process or thread processes data transfer operations initiated in one environment. The other process or thread processes the other environment's operations. Alternatively, IPBS 308 can be a single process that processes both environment's operations.

In addition, IPBS 308 provides an interface between environments. IPBS 308 provides a level of transparency that allows the two environments to interchange data transparently. There is no need for the environments or the applications that run within the environments to be aware of the source or destination environments of the data transfer.

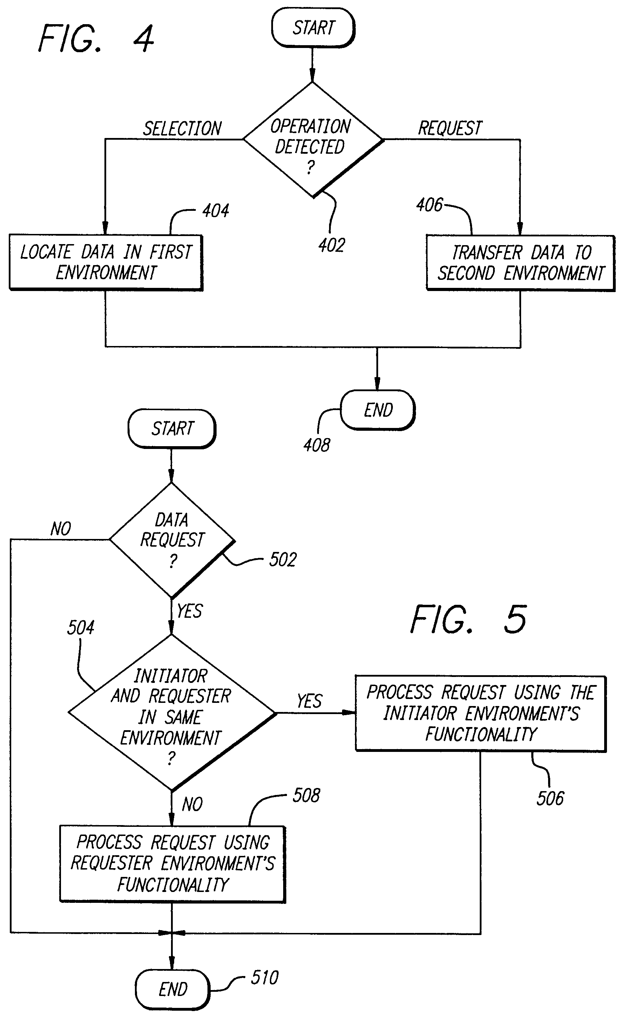

Figure 4 provides a process flow for responding to a data transfer selection or request according to an embodiment of the present invention. At step 402 (i.e., "operation detection?"), a determination is made whether a data transfer operation (selection or request) has been initiated. For example, when an application initiates a data transfer operation such as a copy or cut operation, it selects the data and the operation. The selection of the data and/or the operation acts as a trigger for IPBS 308. At step 404, IPBS 308 responds to the trigger and ensures that the data is available for transfer to another application independent of the data's environment or the application's environment.

If, at step 402, a request for data is detected, the data is transferred to the requesting application independent of the requester's environment. Thus, when an application initiates a paste operation, for example, IPBS 308 makes the current selection data available to the requesting application.

When an application initiates a request for the current selection data (e.g., paste operation), IPBS processes the request independent of the environment within which the selection and/or request originated. Figure 5 provides a process flow for responding to a request for data according to an embodiment of the present invention.

At step 502 (i.e., "data request?"), a determination is made whether a request for selection data has been made. If not, process flow ends at step 510. If a data request is detected, processing continues at step 504. At step 504 (i.e., "initiator and requester in same environment?"), a determination is made whether the data selector and the data requester are in the same environment. If so, processing continues at step 506 to process the request using the initiator (and requester ) environment's data transfer functionality. If they are not in the same environment, processing continues at step 508 to process the request using the requester environment's data transfer functionality.

The following provides an example of data transfer functionality according to an embodiment of the present invention. In this example, the host environment uses X11/DPS of OpenWindows running in the Solaris operating system ("Sun environment"). The NeXTStep/OpenStep environment is emulated environment 304.

### Data Selection

As previously indicated, the Sun environment implements a selection ownership mechanism as described in the ICCCM. When an application selects the data and chooses an operation, the application running in the X11 Windowing system becomes the selection owner. Selection ownership identifies the current source of data should another application request data. Selection ownership is assigned to the X11 window that contains the selection data. To obtain selection data, another application running in the X11 Windowing system, a requesting application, determines the current selection owner. The requesting application requests the data from the selection owner.

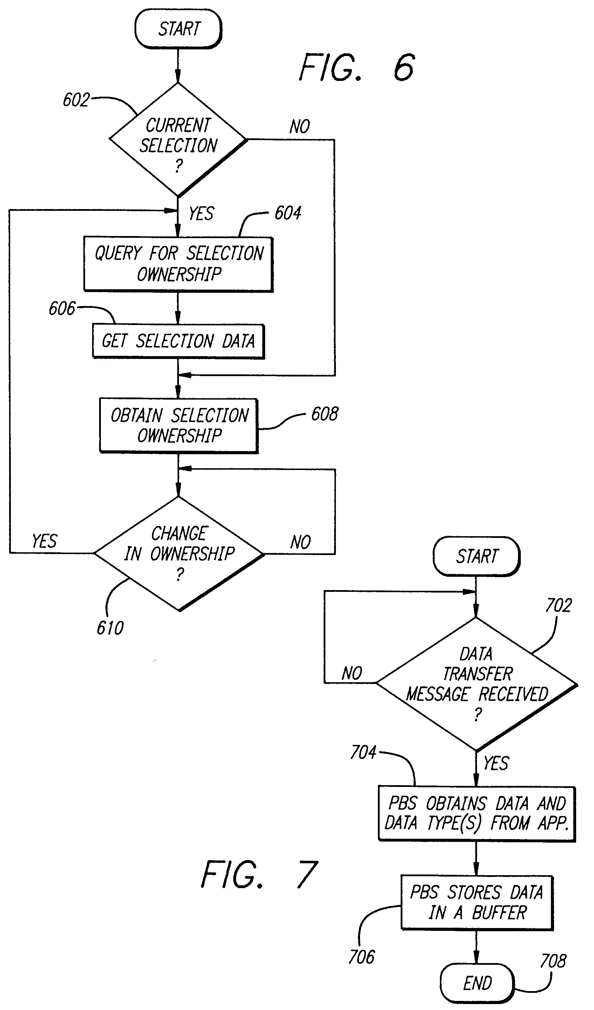

Figure 6 provides a process flow for data selection interface handling for a Sun environment according to an embodiment of the present invention. At step 602 (i.e., "current selection?"), a determination is made whether there is a current selection. If there is, processing continues at step 604 to query for the current selection owner. For example, IPBS 308 queries a window server running in the Sun environment to identify the window that is the current selection owner. At step 606, the selection data is obtained from the current selection owner (e.g., an X11 window). Processing continues at step 608. If it is determined, at step 602, that there is no current selection, processing continues at step 608.

At step 608, IPBS 308 makes a request to the window server to become the selection owner. As a result of this request, IPBS Window 310 becomes the current selection owner. At step 610 (i.e., "change in ownership?"), if no change in the selection ownership is detected, processing continues at step 610 to monitor selection ownership. If, however, an application in the Sun environment performs a data selection, selection ownership reverts to that application's window containing the selection data. When there is a change in ownership, IPBS 308 detects the change in ownership at step 610. Processing continues at step 604 to identify the new selection owner (e.g., an X11 window), obtain the selection data, and become the selection owner as described above in connection with steps 604, 606, and 608.

By becoming the selection owner and then monitoring ownership and regaining ownership upon a change in ownership, IPBS 308 retains exclusive ownership of the current selection. Thus, any request for selection data is processed by IPBS 308.

Data selection is processed in the NeXTStep/OpenStep environment in a different manner. In the NeXTStep/OpenStep environment, an application selects data and chooses a data transfer operation. The selection of the data transfer operation initiates a message to a pasteboard server. The data is made available to a requester by determining and setting the data type of the selection data and by "setting" the data.

Figure 7 provides a process flow for data selection interface handling for a NeXTStep/OpenStep environment according to an embodiment of the present invention. At step 702 (i.e., "data transfer message received?"), a determination is made whether a data transfer message is received. If not processing continues at step 702. If a message is received, processing continues at step 704. Using the messaging and port capabilities of the NeXTStep/OpenStep environment, IPBS 308 obtains the selection data and data type(s) from the initiating application at step 704. The selection data is stored in a buffer at step 706. Processing ends at step 708.

### Data Request

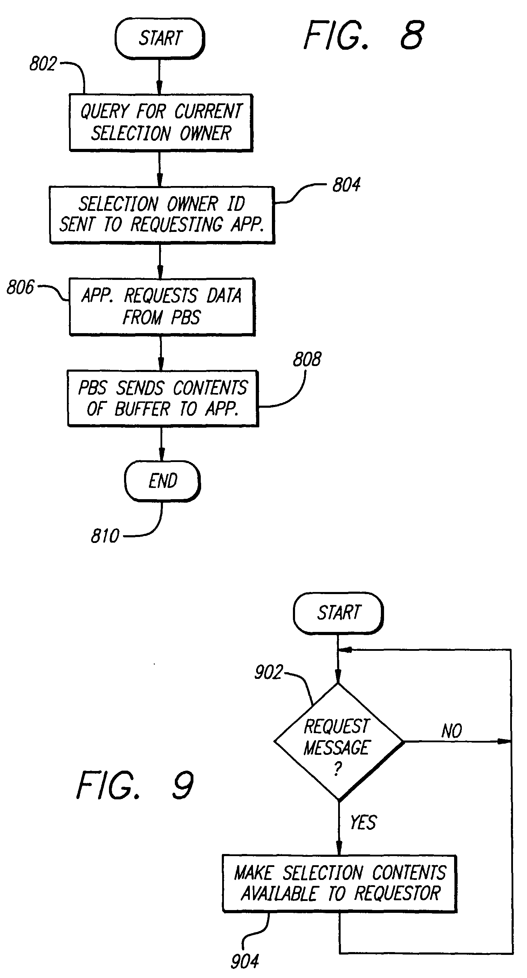

When an application wants to retrieve the current selection data in the Sun environment, it queries the window server for the identity of the current selection owner (e.g., an X11 window). The application requests the selection data from the current selection owner. As previously indicated, IPBS 308 retains exclusive ownership of the selection. The selection data is maintained in a buffer. Thus, when an application running in the Sun environment requests data, the data resident with IPBS 308 is identified as the selection data. It does not matter whether this data originated from the Sun environment or from the NeXTStep/OpenStep environment. Figure 8 provides a process flow for data request interface handling for a Sun environment according to an embodiment of the present invention.

At step 802, a Sun application that wants selection data queries the window server for the identity of the current selection owner. IPBS Window 310 is identified as the current selection owner at step 804. The Sun application requests the data from IPBS 308 at step 806. At step 808, IPBS 308 sends the contents of the buffer to the requesting Sun application. The process flow ends at step 810.

In the NeXTStep/OpenStep environment, data is requested by initiating a data request message. A data request message is initiated by, for example, selecting a paste operation. The data is made available to the requesting application. The requesting application retrieves the data from its current location (e.g., within the selecting application's window or in a buffer of the pasteboard server. Data is made available in this environment by setting the data type(s) and setting the data.

As previously indicated, data that is selected in the Sun environment is copied to a buffer of IPBS 308. Figure 9 provides a process flow for data request interface handling for a NeXTStep/OpenStep environment according to an embodiment of the present invention. At step 902 (i.e., "request message?"), a determination is made whether a data request message is sent to IPBS 308 by a NeXTStep/OpenStep application. If not, processing continues at step 902 to wait for a data request. If a request is received by IPBS 308, processing continues at step 904 to make the data available to the requesting application. The data type(s) are set. Since the data resides in a buffer of IPBS 308, the requesting application can retrieve the data from the buffer. Processing continues at step 902 to wait for another request.

Thus, a method and apparatus for transferring information between environments has been described in conjunction with one or more specific embodiments. The invention is defined by the claims and their full scope of equivalents.

The features disclosed in the foregoing description, in the claims and/or in the accompanying drawings may, both separately and in any combination thereof, be material for realising the invention in diverse forms thereof.

## Claims

1. A method of transferring information between environments comprising the steps of:
detecting a data transfer operation in a first environment;
detecting a request for data that originates in a second environment; and
transferring said data from said first environment to said second environment.

2. The method of claim 1 further comprising the step of locating data associated with said data transfer operation;

3. The method of claim 2 wherein said step of locating further comprises the step of identifying a communication path to an application in said first environment that initiated said data transfer operation.

4. The method of claim 2 wherein said step of locating further comprises the step of storing data selected in an application in temporary storage.

5. The method of claim 1 wherein said step of detecting a transfer operation further comprises the steps of:
capturing ownership of a data transfer selection;
detecting a change in said ownership; and
recapturing said ownership if said change occurs.

6. The method of claim 1 wherein said step of detecting a transfer operation further comprises the step of receiving a message from an application initiating said data transfer operation.

7. The method of claim 1 wherein said step of transferring further comprises the steps of:
determining whether said first environment is the same as said second environment;
processing said request using the data transfer functionality of said first environment if said first and second environments are the same; and
processing said request using the data transfer functionality of said second environment if said first and second environments are not the same.

8. An article of manufacture comprising:
a computer usable medium having computer readable program code embodied therein for transferring information between environments, the computer readable program code in said article of manufacture comprising;
computer readable program code configured to cause a computer to detect a data transfer operation in a first environment;
computer readable program code configured to cause a computer to detect a request for data that originates in a second environment; and
computer readable program code configured to cause a computer to transfer said data from said first environment to said second environment.

9. The article of manufacture of claim 8 further comprising computer readable program code configured to cause a computer to locate data associated with said data transfer operation;

10. The article of manufacture of claim 9 wherein said program code configured to cause a computer to locate data further comprises:
computer readable program code configured to cause a computer to identify a communication path to an application in said first environment that initiated said data transfer operation.

11. The article of manufacture of claim 9 wherein said program code configured to cause a computer to locate data further comprises:
computer readable program code configured to cause a computer to store data selected in an application in temporary storage.

12. The article of manufacture of claim 8 wherein said program code configured to cause a computer to detect a transfer operation further comprises:
computer readable program code configured to cause a computer to capture ownership of a data transfer selection;
computer readable program code configured to cause a computer to detect a change in said ownership; and
computer readable program code configured to cause a computer to recapture said ownership if said change occurs.

13. The article of manufacture of claim 8 wherein said computer readable program code configured to cause a computer to detect a transfer operation further comprises:
computer readable program code configured to cause a computer to receive a message from an application initiating said data transfer operation.

14. The article of manufacture of claim 8 wherein said computer readable program code configured to cause a computer to transfer data further comprises:
computer readable program code configured to cause a computer to determine whether said first environment is the same as said second environment;
computer readable program code configured to cause a computer to process said request using the data transfer functionality of said first environment if said first and second environments are the same; and
computer readable program code configured to cause a computer to process said request using the data transfer functionality of said second environment if said first and second environments are not the same.

15. An apparatus for transferring data between environments, said apparatus comprising:
a processor; and
a data transfer interface coupled to said processor, said data transfer interface processing operations to transfer data between said environments.

16. The apparatus of claim 15 wherein said data transfer interface further comprises:
an interface pasteboard server; and
a window coupled to said interface pasteboard server.

17. The apparatus of claim 16 wherein said interface pasteboard server processes data transfer.
